# FASCICULE DE BREVET EUROPEEN

(11) **EP 1 688 327 B1**
(45) Date de publication et mention de la délivrance du brevet: **02.07.2008**
(21) Numéro de dépôt: 05100843.1
(22) Date de dépôt: 07.02.2005
(51) Int. Cl.: B60R 25/02

(54) **Dispositif antivol pour colonne de direction**
Sperrvorrichtung für eine Lenkspindel
Locking device for a steering shaft

(43) Date de publication de la demande: 09.08.2006
(73) Titulaire: Valeo Sicherheitssysteme GmbH, 85253 Erdweg (DE)
(72) Inventeur: Montay, Jean Philippe c/o VALEO SECURITE HABITACLE Serv. Propriété Industrielle, 94042, CRETEIL (FR)
(74) Mandataire: Rosolen-Delarue, Katell

(56) Documents cités:
- EP-A- 1 182 104
- WO-A-02/085678
- DE-C1- 10 121 919
- GB-A- 2 346 354

## Description

L'invention concerne un dispositif antivol pour colonnes de direction. Plus particulièrement, l'invention se rapporte à un moyen de verrouillage du pêne lorsque ce dernier se trouve dans sa position de blocage de la colonne de direction.

Les dispositifs antivol pour colonne de direction utilisent classiquement un pêne, c'est-à-dire un élément mobile apte à venir se loger dans une partie de la colonne de direction ou plus classiquement dans un logement d'un collier fixé sur la colonne de direction. Ce pêne est destiné à empêcher l'utilisation du volant du véhicule qui ne peut plus tourner du fait que la colonne de direction est bloquée.

Or, le pêne engagé dans la colonne de direction ou le collier peut être désengagé de son logement relativement rapidement en démontant la partie extérieure de la serrure de démarrage qui est relié au dispositif antivol bloquant la colonne de direction. Ce système doit résister le plus efficacement possible à une tentative de vol du véhicule, c'est-à-dire à une tentative de désengagement du pêne.

C'est pourquoi il a été nécessaire de prévoir un système de verrouillage du pêne lorsque ce dernier se trouve en position de blocage de la colonne de direction.

A cette fin, il a été proposé dans le document GB 2346354 de réaliser un dispositif de verrouillage du pêne lorsqu'une partie de la serrure reliée à l'antivol est brisée. Dans ce dispositif, le pêne n'est verrouillé dans sa position de blocage de la colonne de direction que lorsqu'une partie importante de la serrure de démarrage est détruite, libérant ainsi une protubérance s'engageant dans un logement du pêne.

Le système de verrouillage de la position de blocage du pêne est sensiblement identique dans le document EP1379410.

Ces systèmes pour le verrouillage de la position de blocage du pêne, visant essentiellement à empêcher un voleur de débloquer la colonne de direction, sont particulièrement complexes, donc coûteux, et ne sont pas automatiquement déclenchés puisqu'ils ne sont en position active de verrouillage que sous certaines conditions de violation/destruction de la serrure de démarrage et/ou du dispositif antivol auquel elle est reliée.

EP 1 182 104 A décrit un dispositif antivol selon le préambule de la revendication 1.

La présente invention a pour but de pallier aux inconvénients de dispositifs de l'art antérieur en proposant un dispositif mécanique particulièrement simple, donc peu coûteux, et également extrêmement efficace.

La présente invention concerne ainsi un dispositif antivol pour colonne de direction, comprenant un pêne apte à occuper une position de blocage de la colonne de direction par insertion d'au moins une partie dudit pêne dans une portion de la colonne de direction ou d'un élément intermédiaire fixée à la colonne de direction et une position de déblocage de la colonne de direction, la position de blocage de la colonne de direction par le pêne étant verrouillée par un moyen de verrouillage, caractérisé en ce que ledit moyen de verrouillage comprend au moins deux corps mobiles aptes à venir se loger au moins en partie dans des logements présents dans le pêne, au moins deux des logements du pêne et/ou les corps mobiles étant décalés axialement de telle sorte qu'au moins un des deux corps mobiles pénètre un desdits logements.

On entend par l'expression « décalés axialement » le fait que les logements et/ou les corps mobiles se situent à une hauteur, ou niveau, différent, par opposition à la situation dans laquelle ces mêmes logements et/ou corps mobiles sont situés à la même hauteur, ou niveau.

Selon un mode d'exécution de l'invention, les deux corps mobiles sont contigus et au moins deux logements successifs sont décalés axialement.

Deux logements sont dits « successifs » en fonction de leur emplacement respectif en niveau, ou hauteur, sur le pêne de sorte que ces deux logements sont l'un au-dessus de l'autre.

Selon un autre mode d'exécution de l'invention, les deux corps mobiles sont décalés axialement de sorte que ces corps mobiles se trouvent l'un au dessus de l'autre, les logements du pêne étant alors contigus. Les logements du pêne forment une seule et même rainure, ou ligne, qui s'étend d'une extrémité à l'autre du coté, ou de la face, du pêne. Comme précedemment, le pêne comporte plusieurs logements repartis selon l'axe longitudinal du pêne où iront se loger l'un ou l'autre des corps mobiles.

Grâce à l'invention, il est maintenant possible de verrouiller systématiquement et automatiquement la position de blocage de la colonne de direction. En effet, grâce aux deux corps mobiles et aux logements situés en vis-à-vis sur, ou dans, le pêne, le pêne sera toujours verrouillé quelles que soit les exigences de conception, de forme et/ou de dimensions du pêne.

De plus, lors d'une tentative de destruction de la serrure de démarrage et/ou du dispositif antivol auquel elle est reliée, le pêne sera éventuellement légèrement déplacé en hauteur de sorte que le ou les corps mobile(s) initialement engagés dans un logement du pêne soient désengagés, mais alors, par le jeu de déplacement du pêne, au moins un autre corps mobile s'engagera dans un logement, verrouillant à nouveau la position de blocage de la colonne de direction.

L'invention est décrite ci-après plus en détail, à l'aide de figures ne représentant que des modes préférés de l'invention.
La figure 1 est une vue en perspective d'un pêne avec ces multiples logements selon l'invention,
La figure 2 est une vue schématique du dispositif antivol selon l'invention juste avant que les deux corps mobiles soient libérés,
La figure 3 est la même vue schématique que la figure 2 mais lorsque les deux corps mobiles sont libérés, l'un des deux corps étant inséré dans un logement du pêne,
La figure 4 est une vue agrandie d'une portion de la figure 3 dans laquelle sont apparents les deux corps mobiles, le corps mobile gauche étant enfoncé dans un logement du pêne tandis que le corps mobile droit est en butée contre la face du pêne,
La figure 5 est une vue agrandie identique à la figure 4 dans laquelle le corps mobile droit est cette fois-ci enfoncé dans un logement du pêne tandis que le corps mobile gauche est en butée contre la face du pêne,
Les figures 6a et 6b sont des vues schématiques en coupe correspondant respectivement à la position des corps mobiles illustrés sur la figure 4 et sur la figure 5.

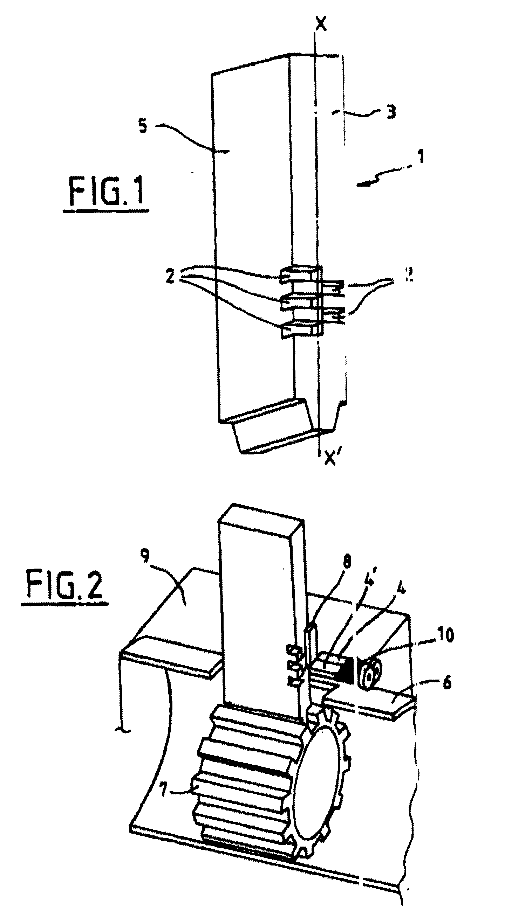

Le pêne 1 selon l'invention est un pêne classique, tant dans sa forme que dans sa conception, mais qui comprend une pluralité de logements 2, 2' présents sur l'une de ses faces. Idéalement, ces logements 2, 2' sont situés sur la face d'un petit côté 3 du pêne 1, comme cela est illustré sur la figure 1, mais les logements 2, 2' pourront également se trouver sur des faces différentes du pêne 1. Le pêne 1 présente ici cinq logements 2, 2'. Ces logements 2, 2' sont situés de part et d'autre d'une ligne médiane X'X, délimitant virtuellement la face du petit côté 3 du pêne 1 en deux parties égales formant une première colonne de logements 2 à droite et une seconde colonne, ou rangée, de logements 2' à gauche. Les logements 2, 2' sont destinés à coopérer avec des corps mobiles 4, 4' contigus aptes à occuper une position dans laquelle lesdits corps 4, 4' sont engagés dans un logement 2, 2'. Les logements 2, 2' de chaque colonne coopèrent respectivement avec un corps mobile 4, 4'.

Ainsi, il existera autant de rangée de logements 2, 2' qu'il y aura de corps mobiles 4, 4', à chaque rangée de logements 2 ou 2' correspondant un corps mobile 4 ou 4'. Dans l'exemple choisi pour illustrer l'invention, il y a trois logements 2' sur la partie gauche définie par la ligne médiane X'X et deux logements 2 à droite de cette ligne X'X. Bien entendu, le nombre de logements 2, 2' est variable et fonction de la conception même du dispositif antivol et de sa mise en place par rapport à la colonne de direction, non représentée sur les figures annexées.

Les corps mobiles 4, 4' pourront consister en une plaque présentant une section rectangulaire. Ces plaques formant ici les corps mobiles 4, 4' s'étendent parallèlement les unes aux autres. Les corps mobiles 4, 4' s'étendent perpendiculairement à l'axe longitudinal du pêne 1. De même, l'axe de translation des corps mobiles 4, 4' est perpendiculaire à l'axe de translation du pêne 1.

Les logements 2, 2' sont ici de forme et de dimensions identiques mais à nouveau on pourra prévoir des formes et dimensions différentes pour chacun des logements 2, 2'. Il est simplement important que les dimensions de chacun des logements 2, 2' correspondent à celui des corps mobiles 4, 4' destinés à y être logés afin que ces derniers puissent pénétrer dans lesdits logements 2, 2' et présentent un jeu, ou débattement, minimum une fois insérés dans un logement 2, 2'. Idéalement, les logements 2, 2' sont présents sur l'un des petits côtés 3 du pêne 1 mais ils pourront bien entendu se situer sur l'une de ses grandes faces 5 ou être présents sur au moins deux des faces 3 et/ou 5 du pêne 1, des corps mobiles 4, 4' étant alors présents en vis-à-vis de chacune des faces 3 ou 5 du pêne 1.

Les logements 2 et 2' présents dans chacune des colonnes, ici la colonne de droite et celle de gauche, s'étendent parallèlement les uns aux autres. De même, les logements 2, 2' sont parallèles entre eux, qu'ils soient présents dans la colonne droite ou dans celle de gauche. On notera également que les logements 2, 2', tant pour la colonne de gauche que pour la colonne de droite, présentent un côté ouvert car chaque logement 2, 2' s'étend jusqu'à l'extrémité du petit côté 3 du pêne 1. Selon une caractéristique du mode d'exécution illustré ici, les logements 2, 2' sont disposés sur n axes, rangées ou colonnes parallèles, n correspondant au nombre de corps mobiles 4, 4'.

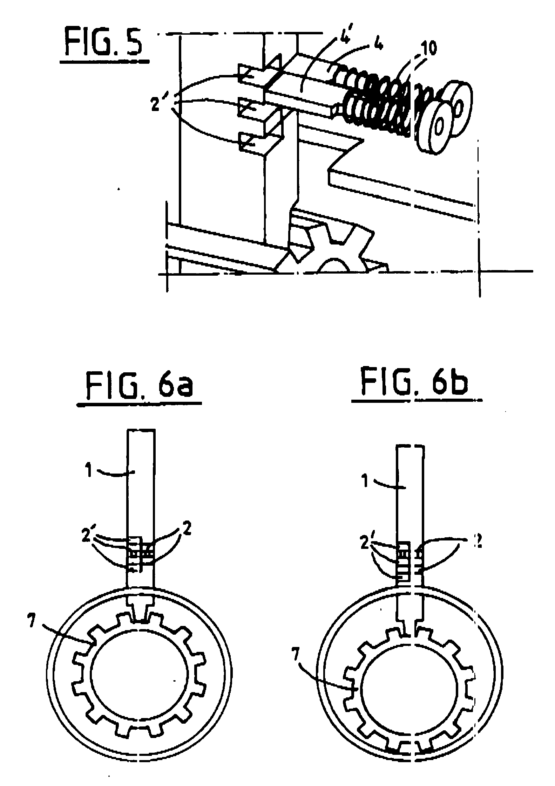

Une particularité de l'invention réside dans le fait que les logements contigus 2 et 2' de chacune des colonnes sont décalés en hauteur, ou niveau, les uns par rapport aux autres de sorte que les logements 2, 2' sur le pêne 1 se présentent, ou sont disposés, en quinconce. Par ailleurs, l'écartement entre deux logements 2 ou 2' dans une même rangée de logements est identique et correspond sensiblement aux dimensions d'un logement 2, 2'. Les dimensions des écartements ou distance entre deux logements 2 ou 2' et les dimensions des logements 2, 2' sont liées aux dimensions des corps mobiles 4, 4', ou plus exactement les dimensions de la section des corps mobiles 4, 4' telles que représentés sur les figures 6a et 6b : en effet, dans le mode de réalisation choisi pour illustrer l'invention, toutes ses dimensions sont sensiblement identiques. Ainsi, comme les deux corps mobiles 4, 4' se trouvent situés sensiblement à la même hauteur, c'est-à-dire qu'ils sont mobiles sensiblement sur le même plan, lors de la libération des corps mobiles 4, 4', au moins l'un des deux corps mobiles 4 ou 4' s'enfonce dans un des logements 2, 2' tandis que l'autre corps mobile 4 ou 4' vient en butée contre le pêne 1. Bien entendu, ces dimensions particulières ainsi que l'emplacement des logements 2, 2' les uns par rapport aux autres est ici la conséquence de la réalisation/utilisation de deux corps mobiles 4, 4'. Dans le cas où plus de deux corps mobiles 4, 4' seraient envisagés, il est clair que les dimensions des logements 2, 2', de la distance entre deux logements 2 ou 2' d'une même rangée et leurs dispositions relatives pourra être différentes ; le but de l'invention consistant à opérer l'insertion automatique d'au moins un des corps mobiles 4 ou 4' dans un logement 2, 2'.

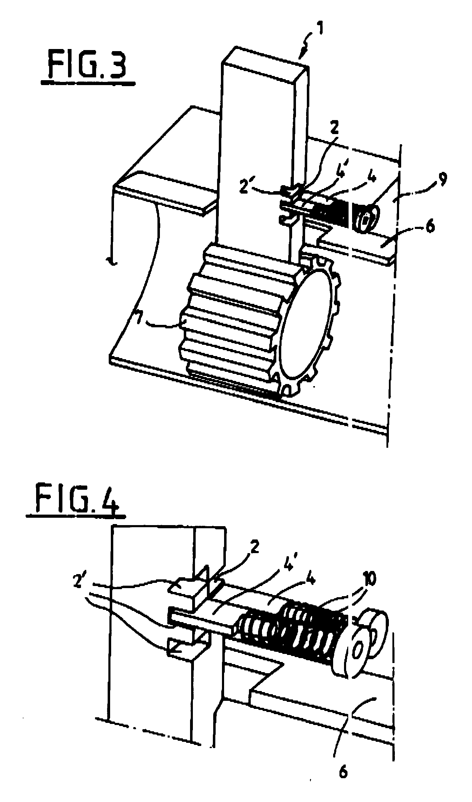

Comme cela est visible sur les figures 2 et 3, lorsque le pêne 1 est en position de blocage de la colonne de direction, l'extrémité du pêne 1, passant à travers une ouverture dédiée du tube de protection 6 de la colonne de direction, est enfoncée entre deux dents du collier 7 fixé à la colonne de direction de sorte que cette dernière ne peut être tournée dans un sens ou l'autre. Dès l'instant où le pêne 1 est en position de blocage de la colonne de direction, le moyen de rétention 8 des corps mobiles 4, 4' se dégage et libère les corps mobiles 4, 4' et automatiquement l'un des deux 4 ou 4' vient se loger dans un des logements 2, 2' du pêne 1, quel que soit la conception du dispositif antivol, de l'interface 9 du dispositif antivol, du pêne 1 ou des exigences, en terme de dimensions et d'espace, relatives à la colonne de direction.

Ainsi, le dispositif selon l'invention comprend un moyen de rétention 8 des corps mobiles 4, 4' apte à bloquer lesdits corps 4, 4' en position désengagée et à libérer ces derniers 4, 4' lorsque le pêne 1 est en position de blocage de la colonne de direction. Le mécanisme activant le système de verrouillage du pêne en position bloqué est constitué d'un doigt 8 retenant les corps mobiles 4, 4'. Ce doigt 8 fait partie d'une pièce, non représentée sur les figures annexées, protegeant l'accès au pêne (coquille, couvercle...). La particularité de ce doigt 8 pourra être de se trouver délimité sur cette pièce par une zone de fusibilité, ou fragilité, qui permet de séparer le doigt 8 de la coquille lors d'essai de manipulation du pêne 1. Le doigt 8 comprend également un chanfrein, non représenté sur les figures annexées, qui permet de libérer facilement le mouvement des corps mobiles 4, 4' lorsque le doigt 8 est séparé de la coquille. La commande de ce moyen de rétention 8 pourra également correspondre, selon un mode d'exécution, à la commande de l'élément de sécurité 17 dans le brevet EP 1182104 déposé par la demanderesse.

L'un au moins des corps mobiles 4 ou 4' est alors amenés automatiquement sous l'action d'un moyen de déplacement 10, ou de commande, en position d'engagement, c'est-à-dire protubérant dans un logement 2 ou 2'. Le ou les corps mobile(s) 4, 4' qui ne parviennent pas dans la position d'engagement viennent en butée contre la face du pêne 1.

Les deux corps mobiles 4, 4' sont chacun soumis à l'action d'un moyen de déplacement 10 exerçant une force pour amener lesdits corps 4, 4' dans l'un desdits logements 2, 2'. Dans le dispositif choisi pour illustrer l'invention, le moyen de déplacement 10 consiste en un ressort.

## Revendications

1. Dispositif antivol pour colonne de direction, comprenant un pêne (1) apte à occuper une position de blocage de la colonne de direction par insertion d'au moins une partie dudit pêne (1) dans une portion de la colonne de direction ou d'un élément intermédiaire (7) fixée à la colonne de direction et une position de déblocage de la colonne de direction, la position de blocage de la colonne de direction par le pêne (1) étant verrouillée par un moyen de verrouillage, **caractérisé en ce que** ledit moyen de verrouillage comprend au moins deux corps mobiles (4, 4') aptes à venir se loger au moins en partie dans des logements (2, 2') présents dans le pêne (1), au moins deux des logements (2, 2') du pêne (1) et/ou les corps mobiles étant décalés axialement de telle sorte qu'au moins un des deux corps mobiles (4 ou 4') pénètre un desdits logements (2 ou 2').

2. Dispositif selon la revendication 1, **caractérisé en ce que** les deux corps mobiles (4, 4') sont contigus et parallèles et **en ce qu'**au moins deux logements (2 et 2') successifs sont décalés axialement.

3. Dispositif selon la revendication 1, **caractérisé en ce que** les deux corps mobiles (4, 4') sont décalés axialement.

4. Dispositif selon la revendication 1 ou 2, **caractérisé en ce que** les deux corps mobiles (4, 4') sont chacun soumis à l'action d'un moyen de déplacement (10) exerçant une force pour amener lesdits corps (4, 4') dans l'un desdits logements (2, 2').

5. Dispositif selon la revendication 3, **caractérisé en ce que** le moyen de déplacement (10) consiste en un ressort.

6. Dispositif selon l'une quelconque des revendications précédentes, **caractérisé en ce qu'**il comprend un moyen de rétention (8) des corps mobiles (4, 4') apte à bloquer lesdits corps (4, 4') et à libérer ces derniers (4, 4') lorsque le pêne (1) est en position de blocage de la colonne de direction.

7. Dispositif selon l'une quelconque des revendications précédentes, **caractérisé en ce que** les corps mobiles (4, 4') consistent en une plaque présentant une section rectangulaire.

8. Dispositif selon la revendication 5, **caractérisé en ce que** les plaques formant les corps mobiles (4, 4') sont parallèles les unes aux autres.

9. Dispositif selon l'une quelconque des revendications précédentes, **caractérisé en ce que** les logements (2, 2') sont présents sur l'un des petits côtés (3) du pêne (1).

10. Dispositif selon l'une quelconque des revendications précédentes, **caractérisé en ce que** les logements (2, 2') sont disposés en quinconce.

11. Dispositif selon l'une quelconque des revendications précédentes, **caractérisé en ce que** les logements (2, 2') sont disposés sur n axes parallèles, n correspondant au nombre de corps mobiles (4, 4').

## Claims

1. Antitheft device for steering column, comprising a bolt (1) able to occupy a blocking position of the steering column by insertion of at least a part of said bolt (1) into a portion of the steering column or of an intermediary element (7) attached to the steering column and an unblocking position of the steering column, the blocking position of the steering column by the bolt (1) is locked by a locking means, **characterised in that** said locking means comprises at least two moving bodies (4, 4') able to be housed at least in part in the housings (2, 2') located in the bolt (1), at least two of the housings (2,2') of the bolt (1) and/or the moving bodies are axially offset so that at least one of the two moving bodies (4 or 4') penetrates into one of said housings (2 or 2').

2. Device according to claim 1, **characterised in that** both moving bodies (4, 4') are adjacent and parallel and at least two housings (2 and 2') are axially offset.

3. Device according to claim 1, **characterised in that** both moving bodies (4, 4') are axially offset.

4. Device according to claim 1 or 2, **characterised in that** both moving bodies (4, 4') are each subject to the action of a moving means (10) exerting a force to bring said bodies (4, 4') into one of said housings (2, 2').

5. Device according to claim 3, **characterised in that** the moving means (10) consists of a spring.

6. Device according to any of the previous claims, **characterised in that** it comprises a retaining mean (8) of the moving bodies (4, 4') able to block said bodies (4, 4') and to free the latter (4, 4') when the holt (1) is in blocking position of the steering column.

7. Device according to any of the previous claims, **characterised in that** the moving bodies (4, 4') consist in a plate wi th a rectangular section.

8. Device according to claim 5, **characterised in that** the plates forming the moving bodies (4, 4') are parallel to each other.

9. Device according to any of the previous claims, **characterised in that** the housings (2, 2') are located on one of the small sides (3) of the bolt (1).

10. Device according to any of the previous claims, **characterised in that** the housings (2, 2') are arranged in staggered rows.

11. Device according to any of the previous claims, **characterised in that** the housings (2, 2') are located on n parallel axes, n corresponding to the number of moving bodies (4,4').

## Patentansprüche

1. Diebstahlsicherung für eine Lenkspindel mit einem Sperrbolzen (1), der durch Einführen mindestens eines Teils des Sperrbolzens (1) in einen Abschnitt der Lenkspindel oder eines an der Lenkspindel befestigten Zwischenteils (7) eine Lenkspindel-Sperrstellung und eine Freigabestellung einnehmen kann, wobei die vom Sperrbolzen (1) bewinkte Lenkspindel-Sperrstellung durch ein Verriegelungsmittel verriegelt wird, **dadurch gekennzeichnet, dass** das Verriegelungsmittel mindestens zwei bewegliche Körper (4, 4') umfasst, die mindestens teilweise in Aufnahmen (2, 2') im Sperrbolzen (1) eingreifen können, wobei mindestens zwei der Aufnahmen (2, 2') des Sperrbolzens (1) und/odet die beweglichen Körper axial so versetzt sind, dass mindestens einer der beiden beweglichen Körper (4 oder 4') in eine der Aufnahmen eingreift (2 oder 2').

2. Diebstahlsicherung nach Anspruch 1, **dadurch gekennzeichnet, dass** die beiden beweglichen Körper (4, 4') aneinander stoßen und zueinander parallel sind und dass mindestens zwei aufeinander folgende Aufnahmen (2 und 2') axial versetzt sind.

3. Diebstahlsicherung nach Anspruch 1, **dadurch gekennzeichnet, dass** die beiden beweglichen Körper axial versetzt sind.

4. Diebstahlsicherung nach Anspruch 1, **dadurch gekennzeichnet, dass** die beiden beweglichen Körper (4, 4') jeweils von einem Verstellmittel (10) beansprucht werden, das eine Kraft ausübt, um die Körper (5, 4') in eine der Aufnahmen (2, 2') zu überfuhren.

5. Diebstahlsicherung nach Anspruch 3, **dadurch gekennzeichnet, dass** das Verstellmittel (10) eine Feder ist.

6. Diebstahlsicherung nach einem der vorausgehenden Ansprüche, **dadurch gekennzeichnet, dass** sie ein Rückhaltemittel (8) zum Zurückhalten der beweglichen Körper (4, 4') umfasst, das die Körper (4, 4') sperren kann und diese (4, 4') freigeben kann, wenn sich der Sperrbolzen (1) in der Lenkspindel-Sperrstellung befindet.

7. Diebstahlsicherung nach einem der vorausgehenden Ansprüche, **dadurch gekennzeichnet, dass** die beweglichen Körper (4, 4') aus einer Platte mit rechteckigem Querschnitt bestehen,

8. Diebstahlsicherung nach Anspruch 5, **dadurch gekennzeichnet, dass** die die beweglichen Körper (4, 4') bildenden Platten parallel zueinander sind.

9. Diebstahlsicherung nach einem der vorausgehenden Ansprüche, **dadurch gekennzeichnet, dass** die Aufnahmen (2, 2') auf einer der Schmalseiten (8) des Sperrbolzens (1) angeordnet sind.

10. Diebstahlsicherung nach einem der vorausgehenden Ansprüche, **dadurch gekennzeichnet, dass** die Aufnahmen (2, 2') in versetzten Reihen angeordnet sind.

11. Diebstahlsicherung nach einem der vorausgehenden Ansprüche, **dadurch gekennzeichnet, dass** die Aufnahmen (2, 2) auf n parallelen Achsen angeordnet sind, wobei n der Anzahl der beweglichen Körper (4, 4') entspricht.
